**Europäisches Patentamt**

**European Patent Office**

**Office européen des brevets**

(19)

(11) Numéro de publication : **0 487 414 A1**

# (12) DEMANDE DE BREVET EUROPEEN

(21) Numéro de dépôt : **91403123.2**

(22) Date de dépôt : **20.11.91**

(51) Int. Cl.$^5$ : **C09K 17/00, C04B 28/26**

(30) Priorité : **20.11.90 FR 9014435**

(43) Date de publication de la demande :
**27.05.92 Bulletin 92/22**

(84) Etats contractants désignés :
**AT BE CH DE DK ES GB GR IT LI LU NL SE**

(71) Demandeur : **G E A T E C société anonyme à responsabilité limitée dite:**
**5 rue de la Touloubre**
**F-13770 Venelles (FR)**

(72) Inventeur : **Caron Claude**
**Val de Torse B2**
**F-13100 Aix en Provence (FR)**

(74) Mandataire : **Hammond, William**
**Cabinet Hammond 96 rue de Montreuil**
**F-75011 Paris (FR)**

(54) **Produit d'injection pour les sables fins et autres masses poreuses.**

(57) Ce produit comprend, d'une part, du ciment et un silicate alcalin et, d'autre part, un agent inhibiteur de la réaction entre les deux constituants ci-dessus.
Application dans le domaine de la construction.

EP 0 487 414 A1

Jouve, 18, rue Saint-Denis, 75001 PARIS

La présente invention est relative à un produit d'injection pour les sables fins et autres masses poreuses comme par exemple, les roches perméables ou les maçonneries dégradées. Ce produit a notamment pour but de permettre l'étanchéité et/ou à la consolidation de sols et matériaux de construction.

Plus le terrain est fin, plus le produit ou coulis d'injection doit être fluide : ceci permet de définir trois types de coulis dans le domaine des sables ou autres milieux poreux à matière fine :

– coulis bentonite-ciment pour les sables grossiers

– gel de silice pour les sables fins à moyens

– résine aqueuse pour les sables limoneux et silts.

Parmi ces produits, le gel de silice est le coulis le moins satisfaisant car il est éminemment réversible et par suite polluant à long terme.

Aussi a-t-on voulu décaler vers les sables moyens et fins la limite d'injectabilité des coulis bentonite-ciment. Ceci a été rendu possible avec l'apparition sur le marché de ciments ultra-fins dont la granulométrie moyenne est de 3 microns au lieu de 20 microns pour les ciments normaux. De tels ciments ultra-fins sont notamment commercialisés par les sociétés ONODA, HOLDERBANK et LAFARGE sous les dénominations commerciales ONODA MC, SPINOR et LANCO 727 respectivement.

Afin que ces ciments ultra-fins le restent effectivement, il faut empêcher leur floculation, soit par voie physique (ultra-sons),soit par voie chimique (addition d'un anti-floculant).

Si on utilise ces liants ultra-fins de façon classique, c'est-à-dire à l'état de coulis stables bentonite-ciment, le résultat n'est pas totalement intéressant car deux causes empêchent la pénétration des coulis bentonite-ciment dans les sables fin et moyens : la grosseur des grains de ciment et la viscosité-rigidité du mélange. En minorant la grosseur des grains de ciment, on ne traite que la première cause. Pour avoir un coulis totalement performant, il faut aussi minorer la viscosité-rigidité de celui-ci : on doit pour cela supprimer la bentonite. On aboutit ainsi à un mélange presque aussi fluide que l'eau.

De tels mélanges très fluides et donc très pénétrants ont été décrits par Messieurs Masao SHIMODA et Hiroshi OHMORY de la société japonaise ONODA dans l'article "Ultra Fine Grouting Material", (Grouting Geotechnical Engineering, ASCE Conference New-Orleans 1981). Utilisé à des dosages compris entre 200 et 400 Kg/m$^3$, le ciment ultra-fincommercialisé sous la dénomination ONODA MC injecté dans des sables fins confère à ceux-ci une résistance de 0,7 MPa (pour 200 Kg de ciment) à 3,3 MPa (pour 400 Kg de ciment). Des résultats sensiblement équivalents ont été trouvés en utilisant les autres ciments ultra-finis précités.

De tels mélanges sans bentonite ont'une décantation d'au moins 60%, de sorte qu'ils ne peuvent assurer une étanchéification du milieu traité : la partie haute des pores emplis de coulis lors de l'injection sera constitué par l'eau de décantation au bout de quelques heures.

Pour pallier cet inconvénient majeur, la société ONODA préconise l'addition de silicate de soude (Na$_2$ SiO$_3$) qui assure une solidification du mélange avant que le ciment ait pu sédimenter.

Comme la réaction du silicate sur le ciment se produit en moins de deux minutes, c'est-à-dire quasiment instantanément, il faut introduire le silicate au dernier moment lors de la pénétration du coulis dans le terrain. Ceci est possible en utilisant une double pompe doseuse suivie d'une double conduite, elle-même suivie d'un équipement dans le forage comportant deux tubes annulaires terminés par une chambre de mélange au droit de la passe dans laquelle le coulis doit être injecté. Une telle méthode bien que performante est de mise en oeuvre fort délicate.

Pour rendre la réaction silicate-ciment moins rapide, c'est-à-dire que celle-ci ne soit pas achevée avant 20 à 80 minutes, ce qui permet l'utilisation d'une méthodologie classique d'injection, la société SOLETANCHE a décrit dans le document EP-A-336 825 un produit d'injection dans lequel le silicate de soude est remplacé par une liqueur de silice comprenant de la fumée de silice et de la soude à basicité plus élevée (SiO$_2$/Na$_2$O inférieur à 2, alors que ce rapport est supérieur à 2 pour les silicates commerciaux).Cette liqueur de silice, qui contrairement aux silicates du commerce est exempte de silice colloïdale, réagit suffisamment lentement avec le ciment si celui-ci est un ciment de laitier . Néanmoins, ce produits d'injection présente deux inconvénients : il nécessite l'emploi, d'une part, d'un silicate spécial non commercialisé et, d'autre part, d'un ciment de laitier à l'exclusion de tout autre.

Les deux types de produits d'injection décrits ci-dessus qui ont pour but de permettre l'étanchéification et/ ou la consolidation de sables fins ou autres matériaux poreux de faibles perméabilité, font appel, soit à une technique de mise en oeuvre délicate, soit à des constituants de base non commercialisés.

Aussi la présente invention a-t-elle notamment pour but de fournir un produit d'injection pour sables fins et autres masses poreuses afin de permettre leur étanchéification et/ou leur consolidation, qui présente un temps de prise suffisament long pour être injecté en utilisant les procédés classiaues et dont les contituants sont dans le commerce.

Un autre but de la présente invention est de fournir un tel produit de fabrication simple et de prix de revient faible.

Ces buts, ainsi que d'autres qui apparaîtront par la suite, sont atteints par un produit d'injection pour les sables fins et autres masses poreuses comprenant du ciment, un silicate alcalin, et un agent inhibiteur de la réaction des deux constituants entre-eux, qui est choisi parmi les produits qui forment avec la chaux (CaO) un composé moins soluble que la chaux elle-même, et qui sont constitués par les sels acides ou alcalins d'un des acides minéraux ou organiques suivants : carbonique, borique, phosphorique, tartrique,citrique, malonique, malique, succinique, oxalique, lequel produit est, selon la présente invention, caractérisée par le fait que le rapport pondéral silicate/ciment est supérieur à 1, et qu'il comprend de 20 à 2000 kg/m3 de l'agent inhibiteur.

Avantageusement, le rapport pondéral silicate/ciment est compris entre 1,5 à 3,5.

Comme l'homme de métier le sait, le contituantprincipal du ciment est le silicate tricalcique $SiO_2$, 3CaO (en abrégé $C_3S$) dont le CaO libre ou immédiatement hydrosoluble réagit instantanément sur le silicate alcalin en le précipitant sous forme de silicate mono et bicalcique. Puis dans la minute suivante, les cristaux ainsi formés entraînent la cirstallisation de tout le silicate tricalcique ($C_3S$). Cette propriété est mise à profit pour obtenir des ciments à prise quasi-instantanée qui sont notamment utilisés en gunitage ou pour bloquer une venue d'eau. A contrario, dans le cas d'injection des sables, cette réaction primaire instantanée du silicate alcalin sur la chaux (CaO) libre ou hydrolysée doit être empêchée. Afin d'atteindre ce but, on utilise selon la présente invention un agent in hibiteur qui réagit sur le CaO soluble (libre ou hydrolysée) en deux temps :

– dans un premier temps, le CaO réagit avec cet agent inhibiteur de façon à créer un composé dont la solubilité est inférieure à celle de la chaux (CaO), 1,2g/l. Cette première réaction n'entraîne aucune prise du mélange

– dans un second temps, ce composé peu soluble, obtenu ci-dessus, entre en réaction avec le silicate alcalin pour former des cristaux de silicates monocalciques qui entraînent la prise en masse du coulis. Cette seconde réaction se produit quelques dizaines de minutes après la première réaction.

Ainsi au lieu d'avoir la réaction directe et instantanée $CaO + SiO_3Na_2 \rightarrow SiO_3Ca$ on aura la succession des deux réactions ci-après, dans lesquelles A représente l'agent inhibiteur.

$$CaO + A \rightarrow A\,Ca \text{ (peu soluble)}$$
$$A\,Ca + SiO_3\,Na_2 \rightarrow SiO_3\,Ca$$

Cette seconde réaction a lieu au fur et à mesure de la solubilisation du composé ACa.

L'agent inhibiteur doit donc être choisi parmi les produits formant avec la chaux (CaO) un composé moins soluble que la chaux elle-même. De tels produits sont notamment constitués par les sels acides ou alcalins d'un des acides minéraux ou organiques suivants : carbonique, borique, phosphorique, tartrique, citrique, malonique, malique, succinique , oxalique,...

La première réaction (CaO + A → ACa) est obtenue avec tous les ciments quelle que soit leur nature : soit à base Portland comme ceux commercialisés sous les dénominations commerciale ONODA MC, LANCO 727 ou SPINOR E, soit à base laitier comme ceux commercialisés sous les dénominations commerciales SPINOR A ou 1, 2, 3. On peut bien entendu utiliser un mélange de ces deux types de ciment ou même leur ajouter de la chaux puisque celle-ci peut être aussi fine qu'un ciment ultra-fin.

Comme le durcissement et la résistance finale sont quelque peu influencés par le pH du milieu, on en tiendra compte dans le choix de l'agent inhibiteur: un milieu plus basique est plus favorable au durcissement aux ciments à base laitier qu'à ceux à base Portland. Par exemple, on utilisera un phosphate trisodique comme agent inhibiteur pour un ciment à base laitier et un phosphate disodique pour un ciment à base Portland.

Le seconde réaction

$$(A\,Ca + SiO_3\,Na_2 \rightarrow SiO_3\,Ca)$$

est obtenue quelque soit le silicate alcalin du commerce utilisé et quel que soit notamment le rapport $SiO_2/Na_2$ ou KaO à savoir 2 à 4 pour la gamme courante. Comme précédemment il faudra tenir compte de la plus ou moins grande basicité du silicate alcalin pour le choix de l'agent inhibiteur A : celui-ci devra donc être plus basique dans le cas d'un silicate à faible teneur en alcalis et vice-versa.

Contrairement à l'enseignement de l'art antérieur, notamment le document EP-A-336.825, on peut utiliser, selon la présente invention, le silicate à fort dosage : plus de silicate que de ciment. Comme le silicate participe à la résistance finale du mélange, ceci permet, pour une même résistance, de diminuer fortement le dosage en ciment ultra-fin : ceci va dans le sens d'une meilleure injectabilité et d'une économie certaine. Comme expliqué plus haut, il faut des dosages de ciment ultra-fin compris entre 200 et 400 Kg/m³ pour obtenir une résistance comprise entre 0,7 et 3,2 MPa : par contre, le produit selon la présente invention comprend de 85 à 170 Kg/m³ de ciment ultra-fin pour obtenir la même gamme de résistance.

Si on utilise des produits d'injection comprenant de 200 à 400 Kg/m³ de ciment ultra-fin, on obtiendra des coulis ayant une résistance supérieure à 5 MPa : ces coulis sont peu utilisés pour l'injection des sables, mais trouvent leur application pour la consolidation et la régénération des maçonneries dégradées.A de telles proportions en ciment ultra-fin, il peut être nécessaire que le produit d'injection comprenne aussi un agent de défloculation.

Les exemples qui vont suivre et qui n'ont aucun caractère limitatif, n'ont pour but que de mieux faire comprendre la présente invention.

<u>EXEMPLE 1</u>

On réalise un coulis de haute consolidation avec un ciment ultra-fin à base laitier tel que ceux commercialisés par la société HOLDERBANK sous les dénominations SPINOR 1 ou SPINOR A.

La composition du produit d'injection par m³ est

```
- Eau                                            630  l
- Ciment  base  laitier                          200  Kg
- Phosphate  trisodique                           33  Kg
- Agent   inhibiteur : oxalate de sodium           5  Kg
- silicate de soude 43°B (SiO₂/Na₂O = 2,7)       400  Kg
```

Ce coulis d'injection présente une résistance supérieure à 4 MPa.

<u>EXEMPLE 2</u>

On réalise un coulis d'injection de haute consolidation avec un ciment multra-fin à base Portalnd tel que celui commercialisé par la société HOLDERBANK sous la dénomination commerciale SPINOR E, ou par la société ONODA sous la dénomination commerciale ONODA MC ou encore par la société LAFARGE sous la dénomination commerciale LANCO 727.

La composition du produit d'injection par m³ est

```
- Eau                                            610  l
- Ciment  base  Portland                         200  Kg
- Phosphate  disodique                            44  Kg
- Agent   inhibiteur : oxalate de sodium           8  Kg
- silicate de soude 43 Bé (SiO₂/Na₂O = 3,2)      400  Kg
```

Ce coulis d'injection présente une résistance supérieure à 4 MPa.

<u>EXEMPLE 3</u>

On réalise un coulis d'injection de semi-consolidation avec un ciment ultra-fin à base laitier tel que ceux commercialisés par la société HOLDERBANK sous les dénominations commerciales SPINOR 1 ou SPINOR A.

La composition du produit d'injection est :

```
- Eau                                            770  l
- Ciment  base  laitier                          100  l
- Phosphate  trisodique                            9  Kg
- Phosphate  disodique                             7  Kg
- Agent   inhibiteur : oxalate de sodium           3  Kg
- Silicate de soude à 41 Bé (SiO₂/Na₂O = 3,2)    270  Kg
```

Ce coulis d'injection présente une résistance comprise entre 1 et 1,5 MPa

EXEMPLE 4

On réalise un coulis d'injection de haut-consolidation avec un ciment ultra-fin à base Portland tel que celui commercialisé par la société HOLDERBANK sous la dénomination commerciale SPINOR E ou par les sociétés ONODA et LAFARGE sous les dénominations commerciales ONODA MC et LANCO 727, respectivement

La composition du produit d'injection est :

```
-  Eau                                                765  l
-  Ciment  SPINOR  E                                 100  Kg
-  Agent    inhibiteur  :  tartrate  de  sodium       20  Kg
-  Silicate  de  soude  à  39°  B2  (SiO₂/Na₂O  =  3,  3)  260  Kg
```

Ce coulis d'injection présente une résistance comprise entre 1 et 1,5 MPa

**Revendications**

1. Produit d'injection pour les sables et autres masses poreuses comprenant du ciment, un silicate alcalin, et un agent inhibiteur de la réaction des deux constituants entre-eux, qui est choisi parmi les produits qui forment avec la chaux (CaO) un composé moins soluble que la chaux elle-même, et qui sont constitués par les sels acides ou alcalins d'un des acides minéraux ou organiques suivants : carbonique, borique, phosphorique, tartrique, citrique, malonique, malique, succinique, oxalique, caractérisé par le fait que le rapport pondéral silicate/ciment est supérieur à 1, et qu'il comprend de 20 à 200kg/m$^3$ de l'agent inhibiteur.

2. Produit d'injection selon la revendication 1, caractérisé par le fait que le rapport pondéral silicate / ciment est compris entre 1,5 et 3,5.

EP 0 487 414 A1

Office européen
des brevets

**RAPPORT DE RECHERCHE EUROPEENNE**

Numero de la demande

EP 91 40 3123

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 583 166 (E.D. GRAF)<br>* Colonne 1, lignes 47-64; colonne 2, lignes 4-9; colonne 3, lignes 24-49; exemples IV,V; revendication 1 * | 1,2 | C 09 K 17/00<br>C 04 B 28/26 |
| X | FR-A-2 323 652 (EXCHEM)<br>* Page 1, lignes 1-4; page 2, lignes 27-33; page 3, lignes 1-21; exemples 1,2; revendications 1-3 * | 1,2 | |
| Y | FR-A-1 188 122 (MEYNADIER)<br>* Page 1, colonne de gauche, lignes 20-25; page 2, colonne de droite, lignes 5-15, résumé points 1,4a * | 1,2 | |
| Y | GB-A-2 058 037 (COAL IND.)<br>* Page 1, lignes 52-61,82-92; revendications 1,2,8 * | 1,2 | |
| Y | DERWENT FILE SUPPLIER WPI, accession no. 79-23216B [12], Derwent Publications Ltd, Londres, GB; & JP-A-54 021 421 (KANSAI PAINT)<br>* Abrégé en entier * | 1,2 | **DOMAINES TECHNIQUES RECHERCHES (Int. Cl.5)**<br><br>C 09 K |

Le présent rapport a été établi pour toutes les revendications

| Lieu de la recherche | Date d'achèvement de la recherche | Examinateur |
|---|---|---|
| LA HAYE | 21-01-1992 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant

EPO FORM 1503 03.82 (P0402)

6